# EUROPEAN PATENT APPLICATION

(11) **EP 4 432 517 A1**
(43) Date of publication of application: **18.09.2024**
(21) Application number: 22906085.0
(22) Date of filing: 31.10.2022
(51) Int. Cl.: H02J 50/20, H02J 50/50, H02J 50/40

(54) **POWER SUPPLY END, WIRELESS POWER SUPPLY SYSTEM, POWER SUPPLY METHOD, AND COMPUTER STORAGE MEDIUM**

(30) Priority: 14.12.2021 CN 202111524969
(71) Applicant: Huawei Digital Power Technologies Co., Ltd., Shenzhen, Guangdong 518043 (CN)
(72) Inventor: QIN, Haijun, Shenzhen, Guangdong 518043 (CN); WU, Jian, Shenzhen, Guangdong 518043 (CN); LIU, Weirong, Shenzhen, Guangdong 518043 (CN); CHENG, Yuan, Shenzhen, Guangdong 518043 (CN); SHI, Lei, Shenzhen, Guangdong 518043 (CN)
(74) Representative: Maiwald GmbH
(86) International application number: PCT/CN2022/128564
(87) International publication number: WO 2023/109333

(57) **Abstract**

This application provides a power supply end, a wireless power supply system, a power supply method, and a computer storage medium, to improve wireless power supply efficiency. The power supply end includes a transceiver and a plurality of radiation circuits. The transceiver is configured to: generate a charging signal including an electromagnetic wave of at least one frequency band, and separately provide the charging signal for the plurality of radiation circuits. Each of the plurality of radiation circuits can transmit an electromagnetic wave of one or more target frequency bands. The plurality of radiation circuits include a first radiation circuit and a second radiation circuit. One or more target frequency bands included in an electromagnetic wave transmitted by the first radiation circuit are different from one or more target frequency bands included in an electromagnetic wave transmitted by the second radiation circuit. Each of the plurality of radiation circuits is configured to: filter the charging signal, and if a target electromagnetic wave is filtered out, transmit the target electromagnetic wave, where a frequency band corresponding to the target electromagnetic wave is included in one or more target frequency bands corresponding to an electromagnetic wave that can be transmitted by a corresponding radiation circuit.

## Description

### CROSS-REFERENCE TO RELATED APPLICATIONS

This application claims priority to Chinese Patent Application No. 202111524969.5, filed with the China National Intellectual Property Administration on December 14, 2021 and entitled "POWER SUPPLY END, WIRELESS POWER SUPPLY SYSTEM, POWER SUPPLY METHOD, AND COMPUTER STORAGE MEDIUM", which is incorporated herein by reference in its entirety.

### TECHNICAL FIELD

This application relates to the field of charging technologies, and in particular, to a power supply end, a wireless power supply system, a power supply method, and a computer storage medium.

### BACKGROUND

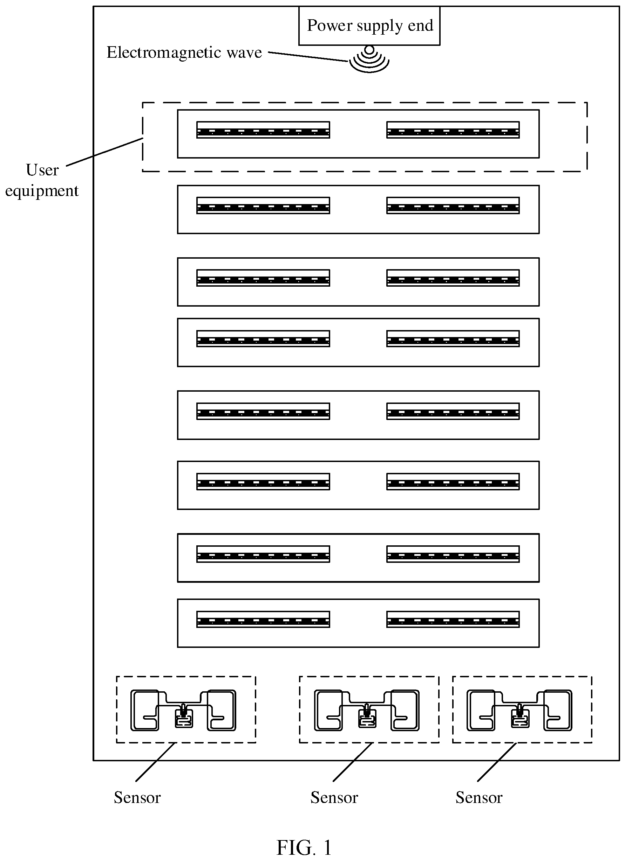

Currently, a plurality of sensors are usually arranged in an equipment room or a cabinet in a scenario such as a data center. A charging scheme for the sensors is gradually developed from a wired power supply scheme to a wireless power supply (or wireless charging) scheme. The wireless power supply scheme has a plurality of problems. An example in which the sensors in the cabinet are charged is used. As shown in FIG. 1, user equipments such as servers in an existing cabinet are placed layer by layer. A power supply end in the cabinet usually uses an antenna to transmit an electromagnetic wave for wireless power supply. The user equipments placed layer by layer block an electromagnetic wave transmitted by the power supply end to some sensors. As a result, signal strength of the electromagnetic wave received by the sensor is weak, resulting in low power supply efficiency. If the user equipments completely block electromagnetic waves transmitted by some power supply ends to the some sensors, the some sensors cannot receive the electromagnetic wave for wireless power supply. As a result, the sensors cannot be charged, and normal work of the sensors is affected. It can be learned that an existing centralized wireless power supply scheme has disadvantages, for example, power supply efficiency is low, or operation of the sensor is affected because the sensors cannot be wirelessly charged due to blocking of the sensors.

### SUMMARY

This application provides a power supply end, a wireless power supply system, a power supply method, and a computer storage medium, to improve wireless power supply efficiency.

According to a first aspect, an embodiment of this application provides a power supply end. The power supply end may include a transceiver and a plurality of radiation circuits. The transceiver may generate a charging signal including an electromagnetic wave of at least one frequency band. The transceiver is coupled to each of the plurality of radiation circuits and may provide the generated charging signal for each radiation circuit. Each of the plurality of radiation circuits has a capability of transmitting an electromagnetic wave of one or more target frequency bands. In other words, each radiation circuit corresponds to one or more target frequency bands, and the radiation circuit may transmit an electromagnetic wave of a target frequency band corresponding to the radiation circuit. Each of the plurality of radiation circuits may filter a charging signal provided by the transceiver. If a target electromagnetic wave is filtered out, the target electromagnetic wave is transmitted, and the target electromagnetic wave transmitted by the radiation circuit may be used to charge a to-be-charged apparatus. A frequency band corresponding to the target electromagnetic wave is included in one or more target frequency bands corresponding to an electromagnetic wave that can be transmitted by each radiation circuit. In other words, the frequency band corresponding to the target electromagnetic wave is included in a frequency band of the electromagnetic wave that can be transmitted by each radiation circuit. There may be two radiation circuits: a first radiation circuit and a second radiation circuit, in the plurality of radiation circuits. One or more target frequency bands included in an electromagnetic wave that can be transmitted by the first radiation circuit may be different from one or more target frequency bands included in an electromagnetic wave that can be transmitted by the second radiation circuit. For example, a quantity of target frequency bands included in the electromagnetic wave that can be transmitted by the first radiation circuit is different from a quantity of target frequency bands included in the electromagnetic wave that can be transmitted by the second radiation circuit. Alternatively, a quantity of target frequency bands included in the electromagnetic wave that can be transmitted by the first radiation circuit is the same as a quantity of target frequency bands included in the electromagnetic wave that can be transmitted by the second radiation circuit, and one frequency band in the target frequency bands included in the electromagnetic wave that can be transmitted by the first radiation circuit is not included in the target frequency bands included in the electromagnetic wave that can be transmitted by the second radiation circuit.

In this embodiment of this application, the plurality of radiation circuits included by the power supply end can support a distributed power supply manner, and the plurality of radiation circuits are used to provide the electromagnetic wave for wirelessly charging the to-be-charged apparatus. Different radiation circuits may be arranged in different locations. For a to-be-charged apparatus, electromagnetic waves transmitted by different radiation circuits may be received at a location of the to-be-charged apparatus, to avoid a case in which the to-be-charged apparatus cannot be wirelessly charged because an electromagnetic wave transmitted by one radiation circuit is blocked. The transceiver generates a charging signal and provides the charging signal for each radiation circuit, and each radiation circuit transmits an electromagnetic wave of a frequency band that can be supported by the radiation circuit and that is in the charging signal. The frequency band included in the electromagnetic wave in the charging signal generated by the transceiver is adjusted, so that a radiation circuit that supports the frequency band included in the charging signal transmits an electromagnetic wave used for wireless charging, and a radiation circuit that does not support the frequency band included in the charging signal does not transmit an electromagnetic wave used for wireless charging, to flexibly switch on or off the radiation circuit. This facilitates energy saving and improves power supply efficiency of a wireless power supply system.

In a possible design, the power supply end may further include a box body. The box body may accommodate the plurality of radiation circuits and at least one to-be-charged apparatus. The power supply end may supply power to the to-be-charged apparatus accommodated in the box body. Both the power supply end and the to-be-charged apparatus may be arranged in a container with a confined or closed space, such as a box body or a cabinet. The confined space can concentrate electromagnetic waves transmitted by the radiation circuits, to reduce an energy attenuation degree of the electromagnetic wave. This better facilitates energy saving and further improves power supply efficiency of the wireless power supply system.

In a possible design, the power supply end may further include a microstrip transmission line. The transceiver may be coupled to the plurality of radiation circuits through the microstrip transmission line. In some examples, the power supply end may further include a printed circuit board. The microstrip transmission line may be buried in the printed circuit board. In some other examples, the power supply end may further include a printed circuit board. The transceiver, the microstrip transmission line, and each radiation circuit are integrated into the printed circuit board, to implement integration of wireless power supply and communication functions of the power supply end. In such a design, the to-be-charged apparatus and the power supply end do not need to be connected through a cable. This can effectively reduce a connection error rate.

In a possible design, each radiation circuit includes an antenna and a band-pass filter. An input terminal of the band-pass filter is coupled to the microstrip transmission line, and an output terminal of the band-pass filter is coupled to the antenna. An operating frequency band for the band-pass filter covers one or more target frequency bands corresponding to the electromagnetic wave that can be transmitted by each radiation circuit. In this embodiment of this application, the band-pass filter of each radiation circuit can perform filtering processing on the charging signal provided by the transceiver. After the charging signal is input to the band-pass filter, the band-pass filter may output an electromagnetic wave in the operating frequency band for the band-pass filter, and the antenna transmits a signal output by the band-pass filter, so that a third radiation circuit transmits an electromagnetic wave of a frequency band that can be supported by the third radiation circuit and that is in the charging signal.

In a possible design, the power supply end provided in this embodiment of this application may further include a control circuit. The control circuit may be coupled to the transceiver, to control the transceiver. For example, the control circuit may determine, based on frequency band information reported by the at least one to-be-charged apparatus, a charging frequency band for each of the at least one to-be-charged apparatus, and control the transceiver to generate the charging signal. An electromagnetic wave of at least one frequency band included in the charging signal includes an electromagnetic wave of the charging frequency band for each to-be-charged apparatus. The charging frequency band for the to-be-charged apparatus may represent a frequency band of an electromagnetic wave used when the to-be-charged apparatus is wirelessly charged.

In this embodiment of this application, the power supply end can receive frequency band information reported by a to-be-charged apparatus in a wireless power supply system. The control circuit determines the charging frequency band for each to-be-charged apparatus. The charging frequency band for the to-be-charged apparatus may be a frequency band corresponding to an electromagnetic wave used when the to-be-charged apparatus is wirelessly charged. The control circuit may control the transceiver with reference to the frequency band required for wireless charging of each to-be-charged apparatus, so that the charging signal generated by the transceiver includes an electromagnetic wave of the frequency band required for wireless charging of each to-be-charged apparatus. The charging signal is transmitted after passing through the plurality of radiation circuits. Therefore, the power supply end can transmit electromagnetic waves of frequency bands required for wireless charging of each to-be-charged apparatus. Therefore, the control circuit controls the transceiver, and adjusts the charging signal generated by the transceiver, to intelligently switch on or off each radiation circuit of the power supply end, so as to transmit an electromagnetic wave based on a requirement. This better facilitates energy saving and further improves power supply efficiency of the wireless power supply system.

In a possible design, each radiation circuit is further configured to: after receiving a communication signal from the to-be-charged apparatus, transmit the communication signal to the transceiver. The communication signal is carried in the frequency band information of the to-be-charged apparatus. The transceiver is further configured to: demodulate the communication signal, and provide a demodulated signal for the control circuit. The control circuit is further configured to obtain the frequency band information of the to-be-charged apparatus based on the demodulated signal.

In this embodiment of this application, the power supply end may have wireless power supply and communication functions. The third radiation circuit may further receive a communication signal. The transceiver may also have a capability of processing a communication signal, for example, demodulation processing, so that the control circuit obtains information carried in the communication signal. For example, the communication signal may carry frequency band information, namely, the frequency band information reported by the to-be-charged apparatus. Therefore, the control circuit learns information about a wireless frequency band of a charging electromagnetic wave required when each to-be-charged apparatus is wirelessly charged.

In a possible design, the frequency band information may include a received signal strength indicator (received signal strength indicator, RSSI). The RSSI includes signal strength of an electromagnetic wave of each frequency band received by the to-be-charged apparatus. The control circuit may determine, as the charging frequency band for the to-be-charged apparatus, a frequency band corresponding to an electromagnetic wave with maximum signal strength included in the RSSI.

In this embodiment of this application, currently, the to-be-charged apparatus in the wireless power supply system has a capability of sending an RSSI. Therefore, the frequency band information reported by each to-be-charged apparatus may include the RSSI. The power supply end provided in this embodiment of this application can determine the charging frequency band for each to-be-charged apparatus based on the RSSI reported by each to-be-charged apparatus. For an RSSI reported by any to-be-charged apparatus, the control circuit may determine, as a charging frequency band for the to-be-charged apparatus, a frequency band corresponding to maximum signal strength of the RSSI. Therefore, when the power supply end provided in this embodiment of this application is applied to a wireless power supply system, the power supply end may be compatible with existing to-be-charged apparatuses, and compatibility is high.

According to a second aspect, an embodiment of this application further provides a wireless power supply system. The wireless power supply system may include the power supply end according to the first aspect and any possible design of the first aspect and at least one to-be-charged apparatus. The power supply end may wirelessly charge the at least one to-be-charged apparatus.

In a possible design, the power supply end may include a box body. The box body is configured to accommodate a plurality of radiation circuits of the power supply end and the at least one to-be-charged apparatus. Alternatively, the wireless power supply system may further include a box body. The box body is configured to accommodate a plurality of radiation circuits of the power supply end and the at least one to-be-charged apparatus.

In a possible design, the wireless power supply system may be applied to a device management scenario. For example, the wireless power supply system may further include a management device and at least one electronic device. The at least one to-be-charged apparatus is disposed on the at least one electronic device. The wireless power supply system may further include any to-be-charged apparatus, configured to send a positioning signal to the management device. The positioning signal carries location information of the any to-be-charged apparatus. The management device is configured to determine the location information of the any to-be-charged apparatus as location information of an electronic device in which the any to-be-charged apparatus is located.

In this embodiment of this application, the management device may manage the location information of the electronic device. The management device receives the positioning signal sent by the to-be-charged apparatus, to facilitate obtaining carried location information. The location information of the to-be-charged apparatus may reflect the location information of the electronic device in which the to-be-charged apparatus is located, so that the management device can obtain location information of each electronic device.

According to a third aspect, an embodiment of this application further provides a power supply method. The power supply method may be applied to a power supply end. The power supply end includes a transceiver and a plurality of radiation circuits. The transceiver is coupled to the plurality of radiation circuits. Alternatively, the power supply method is applied to the power supply end according to the first aspect and the designs of the first aspect. The method may be performed by the control circuit according to the first aspect, or performed by another functional module similar to the control circuit according to the first aspect. This is not limited in this application. The method includes: determining, based on frequency band information reported by at least one to-be-charged apparatus, a charging frequency band for each of the at least one to-be-charged apparatus, where the charging frequency band for the to-be-charged apparatus represents a frequency band of an electromagnetic wave used when the to-be-charged apparatus is wirelessly charged; and controlling the transceiver to generate a charging signal and provide the charging signal for the plurality of radiation circuits, where the charging signal includes an electromagnetic wave of the charging frequency band for each to-be-charged apparatus.

In a possible implementation, frequency band information reported by a first to-be-charged apparatus includes a received signal strength indicator RSSI. The RSSI includes signal strength of an electromagnetic wave of each frequency band received by the first to-be-charged apparatus, and the first to-be-charged apparatus is any one of the at least one to-be-charged apparatus. The determining, based on frequency band information reported by at least one to-be-charged apparatus, a charging frequency band for each of the at least one to-be-charged apparatus includes: for any to-be-charged apparatus in the at least one to-be-charged apparatus, determining, as a charging frequency band for the any to-be-charged apparatus, a frequency band corresponding to an electromagnetic wave with maximum signal strength included in an RSSI reported by the any to-be-charged apparatus.

According to a fourth aspect, an embodiment of this application further provides a computer-readable storage medium. The computer-readable storage medium stores a computer program, and the computer program is loaded by using a controller, a processor, or a control circuit to perform the method according to the third aspect and any one of the possible designs of the third aspect.

For technical effects that can be achieved according to any one of the second aspect to the fourth aspect, refer to the description of the technical effects that can be achieved by a corresponding design in the first aspect. Details are not described herein again.

### BRIEF DESCRIPTION OF DRAWINGS

FIG. 1 is a schematic diagram of influence of user equipment on signal strength of an electromagnetic wave transmitted by an existing power supply end;
FIG. 2 is a schematic diagram of a centralized wireless power supply scheme;
FIG. 3 is a schematic diagram of a structure of a power supply end according to this application;
FIG. 4 is a schematic diagram of influence of user equipment on signal strength of an electromagnetic wave transmitted by a power supply end according to this application;
FIG. 5 is a schematic diagram of a structure of another power supply end according to an embodiment of this application;
FIG. 6 is a schematic diagram of a structure of still another power supply end according to an embodiment of this application;
FIG. 7 is a schematic diagram of a structure of yet another power supply end according to an embodiment of this application;
FIG. 8 is a schematic diagram of a structure of a wireless power supply system according to an embodiment of this application; and
FIG. 9 is a schematic flowchart of a power supply method according to an embodiment of this application.

### DESCRIPTION OF EMBODIMENTS

Terms used in the following embodiments are merely intended to describe specific embodiments, but are not intended to limit this application. The terms "one", "a", "the", "the foregoing", "the", and "this" of singular forms used in this specification and the appended claims of this application are also intended to include expressions such as "one or more", unless otherwise specified in the context clearly.

Reference to "an embodiment", "some embodiments", or the like in this specification indicates that one or more embodiments of this application include a specific feature, structure, or characteristic described with reference to the embodiment. Therefore, statements such as "in an embodiment", "in some embodiments", "in some other embodiments", and "in other embodiments" that appear at different places in this specification do not necessarily mean referring to a same embodiment. Instead, the statements mean "one or more but not all of embodiments", unless otherwise specifically emphasized in another manner. The terms "include", "have", and their variants all mean "include but are not limited to", unless otherwise specifically emphasized in another manner.

To make the objectives, technical solutions, and advantages of this application clearer, the following further describes this application in detail with reference to the accompanying drawings. To facilitate understanding of advantages of an electric power conversion system provided in embodiments of this application, the following first describes an application scenario of the electric power conversion system.

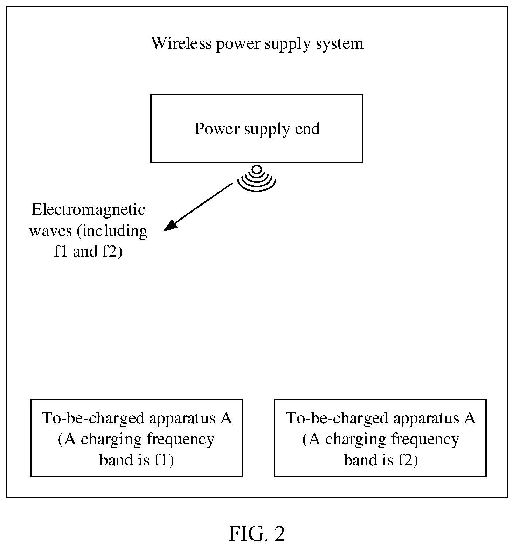

A wireless power supply system may generally include a power supply end (also referred to as a transmit end or a power supply transmit end) and a to-be-charged apparatus (also referred to as a powered end, a receive end, or a powered node). As shown in FIG. 2, a power supply end transmits energy to to-be-charged apparatuses by transmitting an electromagnetic wave. The to-be-charged apparatus receives the electromagnetic wave and converts the electromagnetic wave into electric energy. This implements a wireless power supply process.

Generally, in the wireless power supply system, frequency bands of electromagnetic waves for wirelessly charging a plurality of to-be-charged apparatuses may be different. For example, a to-be-charged apparatus A is wirelessly charged by using an electromagnetic wave of a frequency band f1, and a to-be-charged apparatus B is wirelessly charged by using an electromagnetic wave of a frequency band f2. In other words, a charging frequency band corresponding to the to-be-charged apparatus A is f1, and a charging frequency band corresponding to the to-be-charged apparatus B is f2.

An antenna used in an existing power supply end is a centralized antenna, and the centralized antenna synchronously transmits the electromagnetic wave of the frequency band f1 and the electromagnetic wave of the frequency band f2, to wirelessly charge the to-be-charged apparatus A and the to-be-charged apparatus B synchronously. For example, one antenna transmits electromagnetic waves of charging frequency bands corresponding to N to-be-charged apparatuses, where N may be a positive integer greater than 1. In this way, the power supply end may also be referred to as "1 to N".

For each to-be-charged apparatus, higher signal strength, at a location of the to-be-charged apparatus, of an electromagnetic wave of a frequency band (frequency band of an electromagnetic wave used during wireless charging) corresponding to the to-be-charged apparatus indicates higher wireless power supply efficiency. Conversely, lower signal strength indicates lower wireless power supply efficiency. If the signal strength is zero, wireless power supply cannot be performed.

When power of the electromagnetic wave transmitted by the centralized antenna is unchanged, signal strength, at the location of the to-be-charged apparatus, of the electromagnetic wave of the frequency band corresponding to the to-be-charged apparatus is related to whether there is an obstacle between the to-be-charged apparatus and the power supply end. More obstacles between the to-be-charged apparatus and the power supply end cause more serious blocking of the electromagnetic wave, and the signal strength of the electromagnetic wave is lower. If energy of a signal received by a to-be-charged apparatus is less than electric energy for normal working of the to-be-charged apparatus, the to-be-charged apparatus cannot work normally. This reflects that power supply efficiency of the wireless power supply system is low. It can be learned that, that the electromagnetic wave of the frequency band corresponding to the to-be-charged apparatus is blocked affects the power supply efficiency of the wireless power supply system.

For example, in an equipment room or a cabinet of a data center, a receive end of wireless power supply may be implemented as a sensor. As shown in FIG. 1, sensors in a cabinet are usually widely distributed, and a plurality of user equipments or clients (such as servers) are generally cascaded (or stacked) in the cabinet. An antenna of the power supply end is usually fixed in the cabinet, and transmits electromagnetic waves of different frequency bands to supply power to the sensors in the cabinet. As a quantity of the user equipments in the cabinet increases, cascaded user equipments may reduce signal strength of an electromagnetic wave at a location of a sensor, and even, the sensor cannot receive the electromagnetic wave transmitted by the antenna.

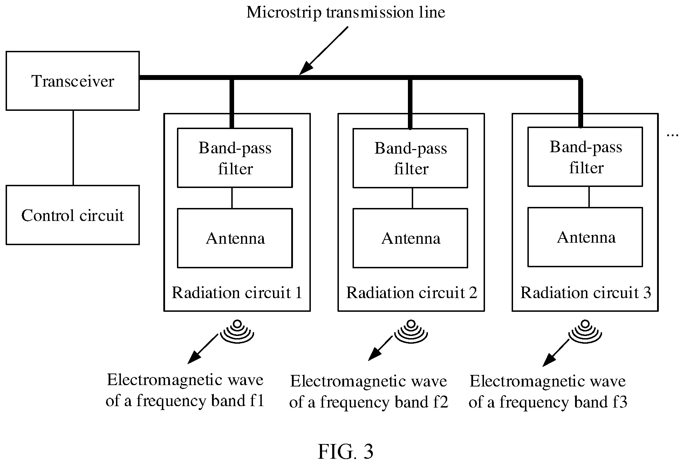

To flexibly adjust signal strength of an electromagnetic wave at a to-be-charged apparatus in the wireless power supply system, and improve the power supply efficiency of the wireless power supply system, as shown in FIG. 3, an embodiment of this application first provides a power supply end. The power supply end may be used in a wireless power supply scenario, for example, applied to a wireless power supply system. Usually, the wireless power supply system may further include one or more to-be-charged apparatuses.

As shown in FIG. 3, the power supply end provided in this application may include a transceiver and a plurality of radiation circuits. The transceiver may be coupled to the plurality of radiation circuits. For example, the transceiver is coupled to each radiation circuit separately. The power supply end may further include a microstrip transmission line. The transceiver may be coupled to each of the plurality of radiation circuits through the microstrip transmission line. For example, an output terminal of the transceiver is coupled to an input terminal of each radiation circuit through the microstrip transmission line.

The transceiver may generate a charging signal including an electromagnetic wave of at least one frequency band. In other words, the transceiver may generate a charging signal including an electromagnetic wave of one frequency band, or may generate a charging signal including electromagnetic waves of a plurality of frequency bands. The transceiver may output the generated charging signal by using the output terminal of the transceiver, and the charging signal may be transmitted to each radiation circuit through the microstrip transmission line. It should be understood that each radiation circuit receives a same signal from the microstrip transmission line. In other words, the transceiver outputs a charging signal, and transmits the charging signal to each radiation circuit through the microstrip transmission line.

Each of the plurality of radiation circuits can transmit an electromagnetic wave of at least one target frequency band. There may be two radiation circuits: a first radiation circuit and a second radiation circuit, in the plurality of radiation circuits. One or more target frequency bands included in an electromagnetic wave that can be transmitted by the first radiation circuit are different from one or more target frequency bands included in an electromagnetic wave that can be transmitted by the second radiation circuit.

In the power supply end, a third radiation circuit (any one or each of the plurality of radiation circuits or each radiation circuit) has a capability of transmitting electromagnetic waves of one or more frequency bands. For ease of description in this application, a function or a working principle of one of the plurality of radiation circuits is used as an example for description herein. A working principle of another radiation circuit is the same as the working principle of the one of the radiation circuits described as an example herein. Repeated parts are not described again. The one of the radiation circuits described as an example herein is defined as the third radiation circuit, and a name is used only for distinguishing, and is not intended to specifically limit the radiation circuit. In other words, the electromagnetic wave that can be transmitted by the third radiation circuit may include the one or more frequency bands. It may be understood that the third radiation circuit corresponds to one or more frequency bands, and the third radiation circuit may transmit an electromagnetic wave of a frequency band corresponding to the third radiation circuit. The frequency band corresponding to the third radiation circuit is a frequency band included in the electromagnetic wave that can be transmitted by the third radiation circuit. It is convenient to distinguish between the frequency band included in the charging signal generated by the transceiver and the frequency band corresponding to the third radiation circuit. In this embodiment of this application, the frequency band corresponding to the third radiation circuit is denoted as a target frequency band corresponding to the third radiation circuit. It should be understood that a frequency band corresponding to the electromagnetic wave that can be transmitted by the third radiation circuit is at least one target frequency band corresponding to the third radiation circuit.

A quantity of the one or more target frequency bands included in the electromagnetic wave that can be transmitted by the first radiation circuit, namely, a quantity of target frequency bands corresponding to the first radiation circuit, is denoted as a first quantity. A quantity of the one or more target frequency bands included in the electromagnetic wave that can be transmitted by the second radiation circuit, namely, a quantity of target frequency bands corresponding to the second radiation circuit, is denoted as a second quantity.

In a possible case, the first quantity is equal to the second quantity. At least one of the target frequency bands corresponding to the first radiation circuit is not in the target frequency bands corresponding to the second radiation circuit.

For example, the frequency bands included in the electromagnetic wave that can be transmitted by the first radiation circuit are respectively a first frequency band and a second frequency band. The frequency bands included in the electromagnetic wave that can be transmitted by the second radiation circuit are respectively the second frequency band and a third frequency band. An electromagnetic wave of the second frequency band can be transmitted by the first radiation circuit, and can also be transmitted by the second radiation circuit. An electromagnetic wave of the first frequency band can be transmitted by the first radiation circuit, but not by the second radiation circuit.

Still as shown in FIG. 3, the plurality of radiation circuits of the power supply end may be denoted as a radiation circuit 1, a radiation circuit 2, and a radiation circuit 3. It should be noted that, in this example, the radiation circuit 1 to the radiation circuit 3 are only used to distinguish and describe the radiation circuits, and are not used as a specific limitation on a quantity of the radiation circuits of the power supply end.

For example, it is assumed that a quantity of target frequency bands corresponding to the radiation circuit 1 is 1, a quantity of target frequency bands corresponding to the radiation circuit 2 is 1, and a quantity of target frequency bands corresponding to the radiation circuit 3 is 1. The target frequency band corresponding to the radiation circuit 1 is a frequency band f1. The target frequency band corresponding to the radiation circuit 2 is a frequency band f2. The target frequency band corresponding to the radiation circuit 3 is a frequency band f3. The target frequency band f1 corresponding to the radiation circuit 1 is different from the target frequency bands f2 and f3 corresponding to the other radiation circuits. It can be learned that the target frequency band corresponding to the radiation circuit 1 is different from the target frequency band corresponding to the radiation circuit 2. The target frequency band corresponding to the radiation circuit 1 is different from the target frequency band corresponding to the radiation circuit 3. Similarly, the target frequency band f2 corresponding to the radiation circuit 2 is different from the target frequency bands f1 and f3 corresponding to the radiation circuit 3. The target frequency band corresponding to the radiation circuit 2 is different from the target frequency band corresponding to the radiation circuit 3.

For another example, it is assumed that a quantity of target frequency bands corresponding to the radiation circuit 1 is 2, a quantity of target frequency bands corresponding to the radiation circuit 2 is 2, and a quantity of target frequency bands corresponding to the radiation circuit 3 is 2. The target frequency bands corresponding to the radiation circuit 1 may be a frequency band f1 and a frequency band f4, the target frequency bands corresponding to the radiation circuit 2 may be a frequency band f2 and a frequency band f5, and the target frequency bands corresponding to the radiation circuit 3 may be a frequency band f3 and a frequency band f6. If the frequency band f4 in the target frequency bands corresponding to the radiation circuit 1 is not a target frequency band corresponding to the radiation circuit 2, the target frequency bands corresponding to the radiation circuit 1 are different from the target frequency bands corresponding to the radiation circuit 2. Similarly, if the frequency band f4 in the target frequency bands corresponding to the radiation circuit 1 is not a target frequency band corresponding to the radiation circuit 3, the target frequency bands corresponding to the radiation circuit 1 are different from the target frequency bands corresponding to the radiation circuit 2. If the frequency band f5 in the target frequency bands corresponding to the radiation circuit 2 is not a target frequency band corresponding to the radiation circuit 3, the target frequency bands corresponding to the radiation circuit 2 are different from the target frequency bands corresponding to the radiation circuit 3.

In another possible case, the first quantity is not equal to the second quantity. In other words, the one or more target frequency bands included in the electromagnetic wave that can be transmitted by the first radiation circuit are different from the one or more target frequency bands included in the electromagnetic wave that can be transmitted by the second radiation circuit.

The third radiation circuit may filter the charging signal provided by the transceiver. If a target electromagnetic wave is filtered out (a frequency band corresponding to the target electromagnetic wave is included in the at least one target frequency band corresponding to the third radiation circuit), the target electromagnetic wave is transmitted, to charge the to-be-charged apparatus. In other words, the third radiation circuit may transmit an electromagnetic wave of the target frequency band that is in the charging signal and that can be transmitted by the third radiation circuit. Usually, if there is no electromagnetic wave of the target frequency band supported by the third radiation circuit in the charging signal, almost all of the charging signal is filtered out by the third radiation circuit, and the third radiation circuit transmits (or outputs) no electromagnetic wave. In addition, the third radiation circuit may also filter out some noise and transmit the noise.

In a possible implementation, as shown in FIG. 3, the third radiation circuit may include a band-pass filter and an antenna. The band-pass filter may be coupled to the microstrip transmission line and coupled to the antenna. An operating frequency band for the band-pass filter covers the frequency band corresponding to the third radiation circuit. After any signal enters the band-pass filter, the band-pass filter may output an electromagnetic wave in an operating frequency band for the band-pass filter, that is, filter out the electromagnetic wave in the operating frequency band. In some scenarios, the radiation circuit may also be referred to as a radiation module or a radiating element. This is not limited in this application.

Still as shown in FIG. 3, the plurality of radiation circuits of the power supply end may be denoted as the radiation circuit 1, the radiation circuit 2, and the radiation circuit 3. It should be noted that, in this example, the radiation circuit 1 to the radiation circuit 3 are only used to distinguish and describe the radiation circuits, and are not used as a specific limitation on the quantity of the radiation circuits of the power supply end. The target frequency band corresponding to the radiation circuit 1 is the frequency band f1. The target frequency band corresponding to the radiation circuit 2 is the frequency band f2. The target frequency band corresponding to the radiation circuit 3 is the frequency band f3. The radiation circuit 1 is used as an example. An operating frequency band for a band-pass filter in the radiation circuit 1 may cover the frequency band f1. If a charging signal does not include an electromagnetic wave of the frequency band f1, the charging signal is suppressed by the band-pass filter, and almost no signal is filtered out by the band-pass filter, and almost no signal is transmitted through the antenna, so that the radiation circuit 1 stops transmitting or does not transmit an electromagnetic wave. If a charging signal includes an electrical signal of the frequency band f1, usually, when filtering the charging signal, the band-pass filter can filter out the electromagnetic wave of the frequency band f1, and an electromagnetic wave obtained through filtering is transmitted through the antenna, so that the radiation circuit 1 transmits the electromagnetic wave of the frequency band f1.

According to the power supply end provided in this application, the radiation circuits are generally distributed at different locations in the wireless power supply system, and each radiation circuit may transmit an electromagnetic wave of a corresponding frequency band, to charge the to-be-charged apparatus. Because the locations of the radiation circuits are different, signal strength of electromagnetic waves that are transmitted by the radiation circuits and that are received by the to-be-charged apparatus may also be different. This design can facilitate wireless charging of the to-be-charged apparatus by using an electromagnetic wave with high received signal strength, thereby improving the wireless power supply efficiency of the system. In addition, a case in which the to-be-charged apparatus cannot be wirelessly charged due to blocking by an obstacle is avoided. It can be learned that the power supply end provided in this embodiment of this application can improve coverage of an electromagnetic wave of each frequency band in the wireless power supply system, so that the to-be-charged apparatus can flexibly adjust a charging frequency band.

Compared with the existing power supply end that uses the centralized antenna to transmit an electromagnetic wave used for wireless power supply, in the power supply end provided in this application, each radiation circuit transmits an electromagnetic wave of a target frequency band that is in a charging signal and that can be supported by the radiation circuit, and the transceiver adjusts an electromagnetic wave of a frequency band included in an output charging signal. This flexibly adjusts a radiation circuit that transmits an electromagnetic wave used to wirelessly charge the to-be-charged apparatus, flexibly adjusts signal strength of the electromagnetic wave in the wireless power supply system, improves signal strength of a location of the to-be-charged apparatus, and improves the wireless power supply efficiency of the wireless power supply system.

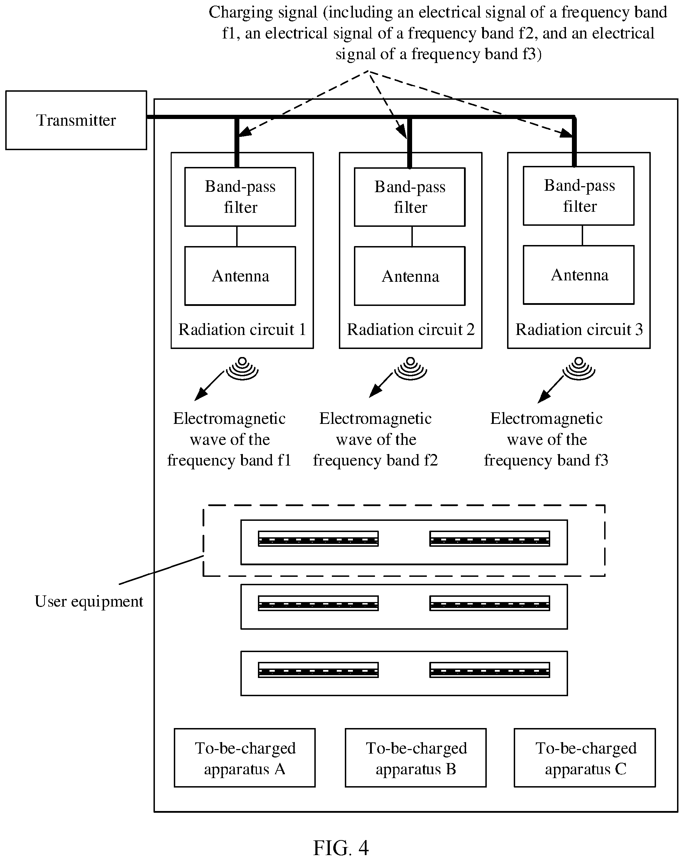

To facilitate understanding of an advantage of the power supply end provided in this embodiment of this application that the power supply end can improve coverage (for example, signal strength) of an electromagnetic wave used for wireless charging (or power supply) in the wireless power supply system. The following describes in detail a working process of the power supply end in a wireless power supply scenario. As shown in FIG. 4, a power supply end may be applied to a scenario of a data center, and a plurality of radiation circuits of the power supply end provided in this embodiment of this application may be disposed in a cabinet. A target frequency band corresponding to a radiation circuit 1 is a frequency band f1, a target frequency band corresponding to a radiation circuit 2 is a frequency band f2, and a target frequency band corresponding to a radiation circuit 3 is a frequency band f3. A transceiver of the power supply end may generate and output a first charging signal. The first charging signal may include an electromagnetic wave of the frequency band f1, an electromagnetic wave of the frequency band f2, and an electromagnetic wave of the frequency band f3. The radiation circuit 1 receives the first charging signal through a microstrip transmission line, and filters the first charging signal. A signal obtained through filtering includes the electromagnetic wave of the frequency band f1, and the electromagnetic wave of the frequency band f1 is transmitted through an antenna. The radiation circuit 2 receives the first charging signal through a microstrip transmission line, and filters the first charging signal. A signal obtained through filtering includes the electromagnetic wave of the frequency band f2, and the electromagnetic wave of the frequency band f2 is transmitted through an antenna. The radiation circuit 3 receives the first charging signal through a microstrip transmission line, and filters the first charging signal. A signal obtained through filtering includes the electromagnetic wave of the frequency band f3, and the electromagnetic wave of the frequency band f3 is transmitted through an antenna. It is assumed that a location of a to-be-charged apparatus A is fixed, and a location of user equipment is also fixed. Due to different locations of the radiation circuit 1, the radiation circuit 2, and the radiation circuit 3, signal strength of the electromagnetic wave of the frequency band f1 received by the to-be-charged apparatus A, signal strength of the electromagnetic wave of the frequency band f2 received by the to-be-charged apparatus A, and signal strength of the electromagnetic wave of the frequency band f3 received by the to-be-charged apparatus A are usually different.

In a possible scenario, in a wireless power supply system in which the power supply end provided in this embodiment of this application is located, each to-be-charged apparatus may be wirelessly charged by independently using an electromagnetic wave with high signal strength. For example, the to-be-charged apparatus A may preferably be wirelessly charged by using a received electromagnetic wave with maximum signal strength. Similarly, a to-be-charged apparatus B may preferably be wirelessly charged by using a received electromagnetic wave with maximum signal strength. A to-be-charged apparatus C may also preferably be wirelessly charged by using a received electromagnetic wave with maximum signal strength. For example, if a frequency band corresponding to the electromagnetic wave with the maximum signal strength received by the to-be-charged apparatus A is the frequency band f1, the to-be-charged apparatus A may be wirelessly charged by using the electromagnetic wave of the frequency band f1. If a frequency band corresponding to the electromagnetic wave with the maximum signal strength received by the to-be-charged apparatus B is the frequency band f3, the to-be-charged apparatus B may be wirelessly charged by using the electromagnetic wave of the frequency band f3. If a frequency band corresponding to the electromagnetic wave with the maximum signal strength received by the to-be-charged apparatus C is the frequency band f3, the to-be-charged apparatus C may be wirelessly charged by using the electromagnetic wave of the frequency band f3.

In another possible scenario, the power supply end provided in this embodiment of this application may flexibly turn off an electromagnetic wave transmitted by the radiation circuit. For example, a radiation circuit of which a transmitted electromagnetic wave is not used by a to-be-charged apparatus is turned off. In the foregoing example, in the wireless power supply system, it is assumed that the power supply end may transmit the electromagnetic wave of the frequency band f1, the electromagnetic wave of the frequency band f2, and the electromagnetic wave of the frequency band f3. However, the to-be-charged apparatus A, the to-be-charged apparatus B, and the to-be-charged apparatus C are wirelessly charged by using only the electromagnetic wave of the frequency band f1 and the electromagnetic wave of the frequency band f3. The electromagnetic wave of the frequency band f2 transmitted by the power supply end is not used, resulting in waste. To save energy, the power supply end may turn off a radiation circuit by which a frequency band corresponding to an electromagnetic wave transmitted is the frequency band f2. For example, the transceiver may generate and output a second charging signal. The second charging signal includes the electromagnetic wave of the frequency band f1 and the electromagnetic wave of the frequency band f3. The radiation circuit 1 receives the second charging signal through the microstrip transmission line, filters the second charging signal, and transmits the electromagnetic wave of the frequency band f1 through the antenna. The radiation circuit 2 receives the second charging signal through the microstrip transmission line, and filters the second charging signal. The second charging signal does not include the electromagnetic wave of the frequency band f2, and a band-pass filter in the radiation circuit 2 filters out almost all of the second charging signal. It can be learned that a signal obtained through filtering does not include the electromagnetic wave of the frequency band 2, so that the antenna cannot transmit the electromagnetic wave of the frequency band 2, and the radiation circuit 2 does not transmit the electromagnetic wave of the frequency band 2. The radiation circuit 3 receives the second charging signal through the microstrip transmission line, filters the second charging signal, and transmits the electromagnetic wave of the frequency band f3 through the antenna.

It can be learned from the foregoing examples that, in the power supply end provided in this embodiment of this application, some radiation circuits do not transmit electromagnetic waves, and the other radiation circuits transmit electromagnetic waves. In this design, the power supply end can dynamically adjust a frequency band corresponding to the transmitted electromagnetic wave, and do not transmit or stop transmitting an electromagnetic wave of a frequency band not used by the to-be-charged apparatuses. This can save energy. The power supply end may flexibly adjust, based on a requirement for an electromagnetic wave of a frequency band used by the to-be-charged apparatus, a frequency band in which the electromagnetic wave is transmitted, that is, allocate coverage of the electromagnetic wave as required. It can be learned that the power supply end provided in this embodiment of this application can maximize efficiency of the wireless power supply system, and improve energy use efficiency of the system.

Still as shown in FIG. 3, the power supply end provided in this embodiment of this application may further include a control circuit. The control circuit may include one or more controllers (or processors). The transceiver may generate a charging signal (including an electromagnetic wave of at least one frequency band) under control of the control circuit. In some scenarios, wireless communication may be performed between the power supply end provided in this embodiment of this application and a to-be-charged apparatus. The to-be-charged apparatus may send a communication signal to the power supply end. The radiation circuit of the power supply end may receive the communication signal. Usually, a frequency band within which a communication signal falls is different from a frequency band of an electromagnetic wave used for wireless power supply.

For ease of differentiation, in this embodiment of this application, the communication signal may be understood as a signal that can be used to exchange information, data, or a message. The charging signal may be understood as a signal that can be used to transmit energy in the wireless power supply scenario. In the power supply end provided in this application, each radiation circuit may further have a capability (or a function) of receiving a communication signal. Each radiation circuit may provide the received signal for the transceiver. The transceiver may further have a capability (or a function) of processing communication signal. In other words, the transceiver of the power supply end may not only generate the charging signal including the electromagnetic wave of the at least one frequency band, but also process the communication signal received by the radiation circuit.

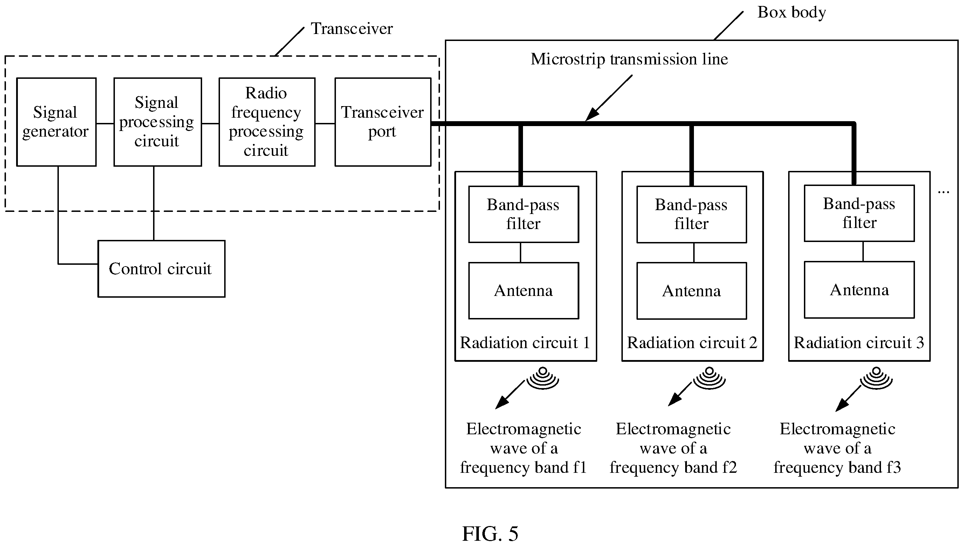

In a possible design, as shown in FIG. 5, a transceiver may include a signal generator (or referred to as a frequency generation processor), a radio frequency processing circuit, and a transceiver port. The signal generator is coupled to the radio frequency processing circuit, and the radio frequency processing circuit is coupled to a microstrip transmission line through transceiver port.

The signal generator may output signals of different waveforms, for example, output signals including at least one frequency band. A control circuit may control the signal generator of the transceiver, to change a signal output by the signal generator. The radio frequency processing circuit may perform frequency mixing processing, power amplification processing, and the like on the signal provided by the signal generator, and provide a processed signal for each radiation circuit through the microstrip transmission line.

The transceiver may further include a signal processing circuit or the like. The radio frequency processing circuit may process a communication signal received by the radiation circuit, and output a processed communication signal to the signal processing circuit. The signal processing circuit may have a signal demodulation capability, may perform signal demodulation on the communication signal, and provide a demodulated signal for the control circuit, so that the control circuit learns of information, data, or a message carried in the communication signal. For example, a to-be-charged apparatus may send a communication signal that carries information about a frequency band used during wireless charging, so that the control circuit controls the signal generator based on information about a frequency band used during wireless charging of each to-be-charged apparatus, and a charging signal output by the transceiver includes an electromagnetic wave of a frequency band used by each to-be-charged apparatus.

The signal processing circuit may have a signal modulation capability. In a scenario in which a power supply end sends a communication signal, the control circuit may control the signal processing circuit to generate a communication signal. For example, the signal processing circuit may modulate a carrier, generate a communication signal, and output the communication signal to the radio frequency processing circuit, so that the generated communication signal carries expected information, expected data, or an expected message. The radio frequency processing circuit may perform processing such as power amplification on the communication signal, and transmit a processed signal to each radiation circuit through the microstrip transmission line. An operating frequency band for a band-pass filter of each radiation circuit may further cover a frequency band corresponding to the communication signal, so that each radiation circuit can send a communication signal.

For example, the following describes a process in which a power supply end transmits an electromagnetic wave on demand. In a possible design, a to-be-charged apparatus may send a communication signal to carry frequency band information of the to-be-charged apparatus. A process in which the to-be-charged apparatus sends the communication signal to carry the frequency band information of the to-be-charged apparatus may also be recorded as a process in which the to-be-charged apparatus reports the frequency band information to the power supply end.

The communication signal received by a radiation circuit of the power supply end is processed by a transceiver and then provided for a control circuit, so that the control circuit learns the frequency band information of the to-be-charged apparatus. The control circuit may determine, based on frequency band information of a to-be-charged apparatus A, a charging frequency band corresponding to the to-be-charged apparatus A, or determine, based on frequency band information of a to-be-charged apparatus B, a charging frequency band corresponding to the to-be-charged apparatus B. In this embodiment of this application, a charging frequency band corresponding to the to-be-charged apparatus may be a frequency band of an electromagnetic wave used when the to-be-charged apparatus is wirelessly charged.

In a possible implementation, the frequency band information reported by the to-be-charged apparatus is a charging frequency band for the to-be-charged apparatus. In another possible implementation, the frequency band information of the to-be-charged apparatus may be an RSSI, or the frequency band information of the to-be-charged apparatus may include an RSSI. Usually, a to-be-charged apparatus in a wireless power supply system may send an RSSI. In this example, the power supply end may adjust, based on an RSSI sent by each to-be-charged apparatus, an electromagnetic wave transmitted by a radiation circuit. This design can improve compatibility and scalability of the wireless power supply system, and may be applied to more scenarios. In the following embodiment, an example in which the frequency band information of the to-be-charged apparatus is the RSSI is used for description.

Each to-be-charged apparatus may receive a signal (electromagnetic wave) of each frequency band, and may determine signal strength of the received signal of each frequency band. Each to-be-charged apparatus may generate (or determine) an RSSI based on the signal strength of the signal of each frequency band. The RSSI may include the signal strength of the received electromagnetic wave of each frequency band, so that the power supply end determines a frequency band corresponding to an electromagnetic wave with maximum signal strength in the RSSI as a charging frequency band for the to-be-charged apparatus. The RSSI may further include a plurality of frequency band identifiers. The control circuit may determine, as an identifier of a charging frequency band for the to-be-charged apparatus, a frequency band identifier corresponding to the electromagnetic wave with the maximum signal strength.

In a possible design, for two adjacent identifiers (band identifiers), strength of a signal that is of a frequency band corresponding to a previous-order identifier and that is received by a to-be-charged apparatus is greater than strength of a signal that is of a frequency band corresponding to a next-order identifier and that is received by the to-be-charged apparatus. For example, frequency bands of signals capable of being received by the to-be-charged apparatus A are f1, f2, f3, and f4 respectively. Signal strength of a signal whose signal frequency band is f1 and that is received by the to-be-charged apparatus A is denoted as SA1, signal strength of a signal whose signal frequency band is f2 and that is received by the to-be-charged apparatus A is denoted as SA2, signal strength of a signal whose signal frequency band is f3 and that is received by the to-be-charged apparatus A is denoted as SA3, and signal strength of a signal whose signal frequency band is f4 and that is received by the to-be-charged apparatus A is denoted as SA4. It is assumed that SA1 > SA2 > SA3 > SA4, a plurality of frequency band identifiers in an RSSI (denoted as RSSI_A) reported by the to-be-charged apparatus A may be an identifier of f1, an identifier of f2, an identifier of f3, and an identifier of f4 in sequence.

For another example, frequency bands of signals capable of being received by the to-be-charged apparatus B are f1, f2, f3, and f4 respectively. Signal strength of a signal whose signal frequency band is f1 and that is received by the to-be-charged apparatus B is denoted as SB1, signal strength of a signal whose signal frequency band is f2 and that is received by the to-be-charged apparatus B is denoted as SB2, signal strength of a signal whose signal frequency band is f3 and that is received by the to-be-charged apparatus B is denoted as SB3, and signal strength of a signal whose signal frequency band is f4 and that is received by the to-be-charged apparatus B is denoted as SB4. It is assumed that SB4 > SB2 > SB3 > SB1, identifiers of frequency bands that are sequentially arranged in an RSSI (denoted as RSSI_B) reported by the to-be-charged apparatus B may be an identifier of f4, an identifier of f2, an identifier of f3, and an identifier of f1 in sequence.

It can be learned that a frequency band corresponding to a 1^{st} frequency band identifier in the RSSI reported by each to-be-charged apparatus is a frequency band with highest signal strength in frequency bands of signals received by the to-be-charged apparatus. The control circuit may determine, as a charging frequency band for the to-be-charged apparatus, the frequency band corresponding to the 1^{st} frequency band identifier in the RSSI reported by each to-be-charged apparatus. For example, the control circuit may determine, based on a frequency band whose 1^{st} frequency band identifier is the identifier of f1 in RSSI_A, that a charging frequency band for the to-be-charged apparatus A is f1. For another example, the control circuit may determine, based on a frequency band whose 1^{st} frequency band identifier is the identifier of f4 in RSSI_B, that a charging frequency band for the to-be-charged apparatus B is f4.

The control circuit may control, based on a charging frequency band for each to-be-charged apparatus, the transceiver to generate a charging signal that includes an electromagnetic wave of the charging frequency band for each to-be-charged apparatus. In other words, the control circuit may control the transceiver based on the charging frequency band for each to-be-charged apparatus, so that the charging signal generated by the transceiver includes the electromagnetic wave of the charging frequency band for each to-be-charged apparatus. After receiving the charging signal, each radiation circuit filters the charging signal. In a plurality of radiation circuits, one or more radiation circuits whose corresponding frequency band is the foregoing charging frequency band may transmit an electromagnetic wave of the charging frequency band. However, a radiation circuit whose corresponding target frequency band is not the charging frequency band may not transmit an electromagnetic wave. Due to such a design, an electromagnetic wave provided by the power supply end for each to-be-charged apparatus may be an electromagnetic wave that is of maximum signal strength and that can be received by each to-be-charged apparatus, to implement optimal power supply of the power supply end. This can save energy, and avoid waste.

In the foregoing example, the control circuit determines, as the charging frequency band for the to-be-charged apparatus, the frequency band corresponding to the electromagnetic wave with maximum signal strength in the RSSI reported by each to-be-charged apparatus. Optionally, the control circuit may determine, as the charging frequency band for each to-be-charged apparatus, a frequency band corresponding to an electromagnetic wave whose signal strength is second highest (less than the maximum signal strength) in the RSSI reported by each to-be-charged apparatus. Alternatively, the control circuit may determine, based on a preset selection solution, the charging frequency band for each to-be-charged apparatus based on the RSSI reported by each to-be-charged apparatus. This is not limited in this application.

In some scenarios, the frequency band information reported by the to-be-charged apparatus may further include an identity of the to-be-charged apparatus. The power supply end may pre-store an identity of each to-be-charged apparatus in the wireless power supply system. The power supply end may determine an identity in the received frequency band information. If the identity in the received frequency band information is a pre-stored identity, an electromagnetic wave of a charging frequency band for the to-be-charged apparatus may be transmitted, to wirelessly charge the to-be-charged apparatus. If the identity in the received frequency band information is not a pre-stored identity, it may be determined that the apparatus that sends the frequency band information is not an apparatus in the wireless power supply system.

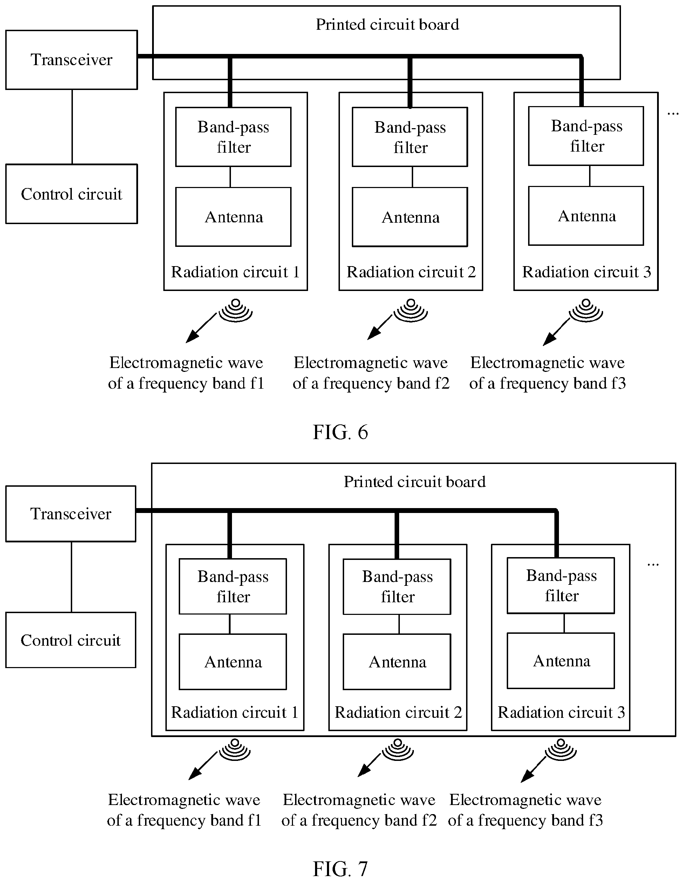

In a possible implementation, as shown in FIG. 6, the power supply end may further include a printed circuit board. The foregoing microstrip transmission line may be buried in the printed circuit board. Alternatively, as shown in FIG. 7, the transceiver, the microstrip transmission line, and each radiation circuit may be integrated on the printed circuit board. In other words, all modules or components of the power supply end may be integrated on the printed circuit board. This facilitates integration of the power supply end in the wireless power supply system. The level of integration is high. Therefore, the power supply end has a small size, occupies less space, and is applied to more scenarios.

In some examples, a band-pass filter in each radiation circuit may be a cavity filter, and is disposed in the printed circuit board. In some examples, an antenna in each radiation circuit may be a patch antenna, an inverted F antenna, or a ceramic antenna. It should be understood that the antenna may have a function of the antenna in any one of the foregoing embodiments. The description of the antenna in each radiation circuit herein is used as an example for description, and is not used as a limitation on a specific form of the antenna. In some examples, antennas in a plurality of radiation circuits may form an antenna array.

In a possible design, as shown in FIG. 5, the power supply end provided in this embodiment of this application may further include a box body, and the plurality of radiation circuits of the power supply end are disposed in the box body. The box body can accommodate a to-be-charged apparatus and the like. The box body can form a closed space. This is beneficial to concentrating the electromagnetic wave for wireless power supply transmitted by the power supply end. The plurality of radiation circuits of the power supply end may be flexibly disposed in different locations of the box body, to flexibly change coverage of the electromagnetic wave for wireless power supply.

In any one of the foregoing embodiments, between the power supply end and each to-be-charged apparatus, the to-be-charged apparatus is charged in a wireless power supply manner; and the power supply end and each to-be-charged apparatus may also communicate with each other in a wireless communication manner and do not need to be connected through a cable, to reduce a connection error rate in the wireless power supply system, and improve communication reliability in the system.

Based on the power supply end provided in any one of the foregoing embodiments, this application further provides a wireless charging system. The wireless charging system may include the power supply end provided in any one of the foregoing embodiments and at least one to-be-charged apparatus.

In a possible implementation, the wireless power supply system may further include a management device and at least one electronic device. The electronic device may be a device such as a server or a client. The management device may be configured to manage the power supply end, or may be configured to manage the server or the client.

The to-be-charged apparatus may be implemented as a sensing apparatus. In an example, the sensing apparatus may report environment information in a box body to the management device. For example, the sensing apparatus may be implemented as a temperature sensor, a humidity sensor, or the like, and may report environment information such as temperature and humidity in the box body to the management device in the wireless power supply system.

In another example, the sensing apparatus may be disposed on the electronic device. The management device may pre-store a correspondence between the sensing apparatus and the electronic device, and an electronic device corresponding to the sensing apparatus is an electronic device in which the sensing apparatus is located. The sensing apparatus may send a positioning signal to the management device, where the positioning signal carries location information of the sensing apparatus. Because the sensing apparatus is disposed on the electronic device, a location of the sensing apparatus may also represent a location of the electronic device. The management device may determine, based on the location information reported by the sensing apparatus, location information of the electronic device in which the sensing apparatus is located. Alternatively, the management device may calculate the location of the sensing apparatus based on the positioning signal sent by the sensing apparatus by using a parameter such as strength of the received positioning signal, to determine the location of the electronic device in which the sensing apparatus is located.

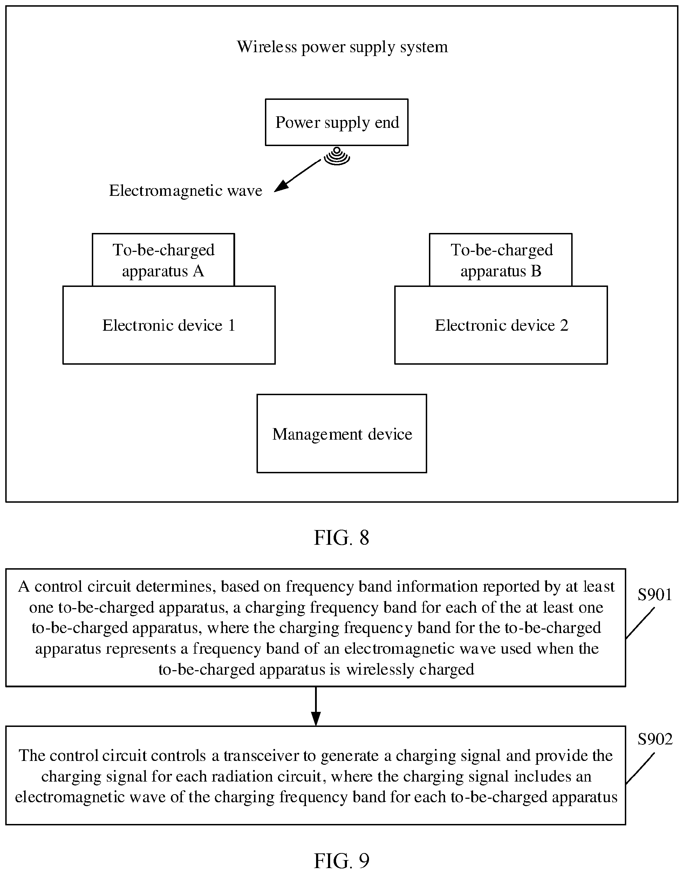

In an asset management scenario, as shown in FIG. 8, the wireless power supply system may include a power supply end and a plurality of to-be-charged apparatuses, for example, a to-be-charged apparatus A and a to-be-charged apparatus B. The power supply end may be configured to wirelessly supply power to the to-be-charged apparatuses. The wireless power supply system may further include a management device and a plurality of electronic devices, such as an electronic device 1 and an electronic device 2. The management device may manage locations of the plurality of electronic devices.

The to-be-charged apparatus A is disposed (or placed) on the electronic device 1, and the to-be-charged apparatus B is disposed (or placed) on the electronic device 2. The management device may pre-store an electronic device corresponding to the to-be-charged apparatus A as the electronic device 1, and store an electronic device corresponding to the to-be-charged apparatus B as the electronic device 2.

Each to-be-charged apparatus may wirelessly communicate with the management device. For example, the to-be-charged apparatus A sends a positioning signal to the management device, where the positioning signal may carry location information of the to-be-charged apparatus A, or the management device may determine a location of the to-be-charged apparatus Abased on the positioning signal sent by the to-be-charged apparatus A. The management device may determine the location of the to-be-charged apparatus A as a location of the electronic device 1 corresponding to the to-be-charged apparatus A, to manage the location of the electronic device 1. Similarly, the to-be-charged apparatus B may send a positioning signal to the management device, where the positioning signal may carry location information of the to-be-charged apparatus B, or the management device may determine a location of the to-be-charged apparatus B based on the positioning signal sent by the to-be-charged apparatus B. The management device may determine the location of the to-be-charged apparatus B as a location of the electronic device 2 corresponding to the to-be-charged apparatus B, to manage the location of the electronic device 2.

This application further provides a power supply method. The power supply method may be applied to the control circuit of the power supply end provided in any one of the foregoing embodiments. As shown in FIG. 9, the power supply method may include the following steps.

Step S901: A control circuit determines, based on frequency band information reported by at least one to-be-charged apparatus, a charging frequency band for each of the at least one to-be-charged apparatus, where the charging frequency band for the to-be-charged apparatus represents a frequency band of an electromagnetic wave used when the to-be-charged apparatus is wirelessly charged.

Step S902: Control a transceiver to generate a charging signal and provide the charging signal for each radiation circuit, where the charging signal includes an electromagnetic wave of the charging frequency band for each to-be-charged apparatus.

The radiation circuit of the power supply end may receive a communication signal sent by the to-be-charged apparatus, and the transceiver may process the communication signal to obtain frequency band information carried in the communication signal, that is, the frequency band information reported by the to-be-charged apparatus.

In a possible design, frequency band information reported by a first to-be-charged apparatus includes a charging frequency band for the first to-be-charged apparatus, and the first to-be-charged apparatus is any one of the at least one to-be-charged apparatus. In another possible design, the frequency band information reported by the first to-be-charged apparatus includes a received signal strength indicator RSSI. The RSSI includes signal strength of an electromagnetic wave of each frequency band received by the first to-be-charged apparatus. The control circuit may determine, as a charging frequency band for the to-be-charged apparatus, a frequency band corresponding to an electromagnetic wave with maximum signal strength in the RSSI reported by the first to-be-charged apparatus.

All or some of the foregoing embodiments may be implemented by using software, hardware, firmware, or any combination thereof. When software is used to implement embodiments, all or some of embodiments may be implemented in a form of a computer program product. The computer program product includes one or more computer instructions. When the computer program instructions are loaded and executed on a computer, all or some of the procedures or functions according to embodiments of this application are generated. The computer may be a general-purpose computer, a dedicated computer, a computer network, or another programmable apparatus. The computer instructions may be stored in a computer-readable storage medium, or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), a semiconductor medium (for example, a solid state disk (solid state disk, SSD)), or the like.

An embodiment of this application further provides a readable storage medium, configured to store the method or algorithm provided in the foregoing embodiment. For example, the readable storage medium is a random access memory (random access memory, RAM), a flash memory, a read-only memory (read-only memory, ROM), a non-volatile ROM (electronic programmable ROM, EPROM), a register, a hard disk, a removable disk, or any other form of storage medium in the art.

Steps of the method or algorithm described in embodiments of this application may be directly embedded in a control circuit. The control circuit may include a RAM memory, a flash memory, a ROM memory, an EPROM memory, a register, a hard disk, a removable disk, or any other form of storage medium in the art, and is configured to store the steps of the method or algorithm provided in embodiments of this application. For example, the storage medium may be connected to a processor (or controller) in the control circuit, so that the processor (or controller) can read information from the storage medium, and can write information to the storage medium. Optionally, the storage medium may alternatively be integrated into the control circuit and a processor (or controller).

These computer program instructions may also be loaded onto a computer or another programmable data processing device, so that a series of operations and steps are performed on the computer or the another programmable device, to generate computer-implemented processing. Therefore, the instructions executed on the computer or the another programmable device provide steps for implementing a specific function in one or more processes in the flowcharts and/or in one or more blocks in the block diagrams.

Although this application is described with reference to specific features and embodiments thereof, it is clear that various modifications and combinations may be made to them without departing from the spirit and scope of this application. Correspondingly, the specification and accompanying drawings are merely example descriptions of this application defined by the appended claims, and are considered as any of or all modifications, variations, combinations or equivalents that cover the scope of this application.

It is clearly that a person skilled in the art can make various modifications and variations to this application without departing from the spirit and scope of this application. This application is intended to cover these modifications and variations of this application provided that they fall within the scope of protection defined by the following claims and their equivalent technologies.

## Claims

1. A power supply end, comprising a transceiver and a plurality of radiation circuits, wherein the transceiver is coupled to the plurality of radiation circuits;
the transceiver is configured to: generate a charging signal comprising an electromagnetic wave of at least one frequency band, and separately provide the charging signal for the plurality of radiation circuits;
each of the plurality of radiation circuits can transmit an electromagnetic wave of one or more target frequency bands, the plurality of radiation circuits comprise a first radiation circuit and a second radiation circuit, and one or more target frequency bands comprised in an electromagnetic wave transmitted by the first radiation circuit are different from one or more target frequency bands comprised in an electromagnetic wave transmitted by the second radiation circuit; and
each of the plurality of radiation circuits is configured to: filter the charging signal, and if a target electromagnetic wave is filtered out, transmit the target electromagnetic wave, wherein a frequency band corresponding to the target electromagnetic wave is comprised in one or more target frequency bands corresponding to an electromagnetic wave that can be transmitted by a corresponding radiation circuit, and the target electromagnetic wave is used to charge a to-be-charged apparatus.

2. The power supply end according to claim 1, further comprising a control circuit, wherein the control circuit is coupled to the transceiver;
the control circuit is configured to: determine, based on frequency band information reported by the at least one to-be-charged apparatus, a charging frequency band for each of the at least one to-be-charged apparatus; and control the transceiver to generate the charging signal, wherein an electromagnetic wave of at least one frequency band comprised in the charging signal comprises an electromagnetic wave of the charging frequency band for each to-be-charged apparatus; and
the charging frequency band for the to-be-charged apparatus represents a frequency band of an electromagnetic wave used when the to-be-charged apparatus is wirelessly charged.

3. The power supply end according to claim 2, wherein each radiation circuit is further configured to: after receiving a communication signal from the to-be-charged apparatus, transmit the communication signal to the transceiver, wherein the communication signal carries the frequency band information of the to-be-charged apparatus;
the transceiver is further configured to: demodulate the communication signal, and provide a demodulated signal for the control circuit; and
the control circuit is further configured to obtain the frequency band information of the to-be-charged apparatus based on the demodulated signal.

4. The power supply end according to claim 2 or 3, wherein the frequency band information comprises a received signal strength indicator RSSI, and the RSSI comprises signal strength of an electromagnetic wave of each frequency band received by the to-be-charged apparatus; and
the control circuit is specifically configured to determine, as the charging frequency band for the to-be-charged apparatus, a frequency band corresponding to an electromagnetic wave with maximum signal strength comprised in the RSSI.

5. The power supply end according to any one of claims 1 to 4, further comprising a microstrip transmission line, wherein the transceiver is coupled to the plurality of radiation circuits through the microstrip transmission line.

6. The power supply end according to claim 5, further comprising a printed circuit board, wherein the microstrip transmission line is buried in the printed circuit board.

7. The power supply end according to claim 5, further comprising a printed circuit board, wherein the transceiver, the microstrip transmission line, and each radiation circuit are integrated on the printed circuit board.

8. The power supply end according to any one of claims 5 to 7, wherein each radiation circuit comprises an antenna and a band-pass filter; and
an input terminal of the band-pass filter is coupled to the microstrip transmission line, an output terminal of the band-pass filter is coupled to the antenna, and an operating frequency band for the band-pass filter covers one or more target frequency bands corresponding to the electromagnetic wave that can be transmitted by each radiation circuit.

9. The power supply end according to any one of claims 1 to 8, further comprising a box body, wherein the box body is configured to accommodate the plurality of radiation circuits and the at least one to-be-charged apparatus.

10. A wireless power supply system, comprising the power supply end according to any one of claims 1 to 9 and at least one to-be-charged apparatus, wherein the power supply end is configured to wirelessly supply power to the at least one to-be-charged apparatus.

11. The system according to claim 10, wherein when the power supply end comprises a box body, the box body is configured to accommodate a plurality of radiation circuits of the power supply end and the at least one to-be-charged apparatus.

12. The system according to claim 10 or 11, wherein the wireless power supply system further comprises a management device and at least one electronic device, wherein the at least one to-be-charged apparatus is disposed on the at least one electronic device;
the wireless power supply system further comprises any to-be-charged apparatus, configured to send a positioning signal to the management device, wherein the positioning signal carries location information of the any to-be-charged apparatus; and
the management device is configured to determine the location information of the any to-be-charged apparatus as location information of an electronic device in which the any to-be-charged apparatus is located.

13. A power supply method, applied to a power supply end, wherein the power supply end comprises a transceiver and a plurality of radiation circuits, and the transceiver is coupled to the plurality of radiation circuits; and
the method comprises:
determining, based on frequency band information reported by at least one to-be-charged apparatus, a charging frequency band for each of the at least one to-be-charged apparatus, wherein the charging frequency band for the to-be-charged apparatus represents a frequency band of an electromagnetic wave used when the to-be-charged apparatus is wirelessly charged; and
controlling the transceiver to generate a charging signal and provide the charging signal for the plurality of radiation circuits, wherein the charging signal comprises an electromagnetic wave of the charging frequency band for each to-be-charged apparatus.

14. The method according to claim 13, wherein frequency band information reported by a first to-be-charged apparatus comprises a received signal strength indicator RSSI, the RSSI comprises signal strength of an electromagnetic wave of each frequency band received by the first to-be-charged apparatus, and the first to-be-charged apparatus is any one of the at least one to-be-charged apparatus; and
the determining, based on frequency band information reported by at least one to-be-charged apparatus, a charging frequency band for each of the at least one to-be-charged apparatus comprises:
for any to-be-charged apparatus in the at least one to-be-charged apparatus, determining, as a charging frequency band for the any to-be-charged apparatus, a frequency band corresponding to an electromagnetic wave with maximum signal strength comprised in an RSSI reported by the any to-be-charged apparatus.

15. A computer-readable storage medium, wherein the computer-readable storage medium stores computer instructions, and when the computer instructions are executed, the method according to claim 13 or 14 is performed.
